(19) **Europäisches Patentamt / European Patent Office / Office européen des brevets**

(11) **EP 2 283 337 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(21) Anmeldenummer: **09757114.5**

(22) Anmeldetag: **02.06.2009**

(51) Int Cl.:
*G01N 1/28* (2006.01)     *G01N 33/483* (2006.01)

(86) Internationale Anmeldenummer:
**PCT/DE2009/000757**

(87) Internationale Veröffentlichungsnummer:
**WO 2009/146680 (10.12.2009 Gazette 2009/50)**

(54) **TRÄGERSYSTEM FÜR DIE LASERMIKRODISSEKTION UND DEN LASERINDUZIERTEN TRANSPORT VON BIOLOGISCHEM MATERIAL UND LEBENDEN ZELLEN**

CARRIER SYSTEM FOR THE LASER MICRODISSECTION AND THE LASER-INDUCED TRANSPORT OF BIOLOGICAL MATERIAL AND LIVING CELLS

SYSTÈME DE SUPPORT POUR LA MICRODISSECTION AU LASER ET LE TRANSPORT INDUIT PAR LASER DE MATÉRIAU BIOLOGIQUE ET DE CELLULES VIVANTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.06.2008 DE 102008026727**

(43) Veröffentlichungstag der Anmeldung:
**16.02.2011 Patentblatt 2011/07**

(73) Patentinhaber:
• **Universität zu Lübeck**
  **23538 Lübeck (DE)**
• **Technische Universität Carolo-Wilhelmina zu Braunschweig**
  **38106 Braunschweig (DE)**

(72) Erfinder:
• **GEBERT, Andreas**
  **07745 Jena (DE)**
• **LACHMANN, Kristina**
  **38553 Wasbüttel (DE)**
• **KLAGES, Claus-Peter**
  **38102 Braunschweig (DE)**
• **ECKERT, Sebastian**
  **03185 Tauer (DE)**
• **VOGEL, Alfred**
  **23568 Lübeck (DE)**

(74) Vertreter: **Lobemeier, Martin Landolf**
**Boehmert & Boehmert**
**Anwaltssozietät**
**Niemannsweg 133**
**24105 Kiel (DE)**

(56) Entgegenhaltungen:
**EP-A2- 0 926 480    US-A1- 2004 077 073**

• **MATTHIAS NAGEL; ROMAIN FARDEL; PASCAL FEURER; MARK HÃ BERLI; FRANK A NÃ 1/4 ESCH; THOMAS LIPPERT; ALEXANDER WOKAUN: "Aryltriazene photopolymer thin films as sacrificial release layers for laser-assisted forward transfer systems: study of photoablative decomposition and transfer behavior" APPLIED PHYSICS A; MATERIALS SCIENCE & PROCESSING, SPRINGER, BERLIN, DE, Bd. 92, Nr. 4, 22. Mai 2008 (2008-05-22), Seiten 781-789, XP019626775 ISSN: 1432-0630**
• **HORNEFFER V; LINZ N; VOGEL A: "Principles of laser-induced separation and transport of living cells" JOURNAL OF BIOMEDICAL OPTICS 2007 SPIE US, Bd. 12, Nr. 5, 2007, XP002548142**
• **KATTAMIS NICHOLAS; PURNICK PRISCILLA; WEISS RON; ARNOLD CRAIG: "Thick film laser induced forward transfer for deposition of thermally and mechanically sensitive materials" APPLIED PHYSICS LETTERS, AIP, AMERICAN INSTITUTE OF PHYSICS, MELVILLE, NY, US, Bd. 91, Nr. 17, 26. Oktober 2007 (2007-10-26), Seiten 171120-171120, XP012099804 ISSN: 0003-6951 in der Anmeldung erwähnt**
• **LACHMANN K; ECKERT S; VOGEL A; KLINGER A; GEBERT A; KLAGES C-P: "Development of a multifunctional coating system for laser-induced material transport" PROGRESS IN ORGANIC COATINGS FEBRUARY 2009 ELSEVIER NL, Bd. 64, Nr. 2-3, Februar 2009 (2009-02), Seiten 294-299, XP025884333**

EP 2 283 337 B1

**Beschreibung**

Die Erfindung betrifft ein Transportsystem für die Lasermikrodissektion und den laserinduzierten Transport biologischen Materials und lebender Zellen in Auffangvorrichtungen. Die Erfindung betrifft insbesondere eine Vorrichtung zur Unterstützung des als "Laser Pressure Catapulting" (LPC) bekannten Verfahrens.

Kleine biologische Proben (Durchmesser von etwa 10 bis über 100 Mikrometer) sind von Interesse beispielsweise bei der Untersuchung histologischer Schnitte, aus denen bestimmte Gewebe- oder Zelltypen zur weiteren Analyse herauspräpariert werden sollen, oder von Zellkulturen, denen lebende Einzelzellen zu entnehmen sind. Das Bearbeiten mit mechanischen Manipulatoren birgt dabei stets das Risiko einer Beschädigung der Probe durch Krafteinwirkung und ist überdies zeitraubend und kaum automatisierbar. Weiterhin birgt sie immer die Gefahr einer Kontaminierung der Proben. Für die Entnahme einer großen Zahl von Proben aus einer biologischen Masse (histologischer Gewebeschnitt, Zellteppich, usw.) ist die rechnerunterstützte Mikrodissektion mit anschließendem laserinduziertem Transport des Dissektats Stand der Technik. Dabei wird die Probe zunächst mit einem fokussierten, gepulsten Laserstrahl aus der biologischen Masse herausgeschnitten und sodann mit einem einzelnen Laserpuls herausgeschleudert ("katapultiert"), wobei eine Auffangvorrichtung (z.B. der Deckel des Analysegefäßes oder eine Mikrotiterplatte) in der vorhersehbaren Flugbahn der Probe angeordnet ist.

In einem Aufbau zum "Laser PressureCatapulting" (LPC) nach der Lehre der DE 196 16 216 A1 befindet sich die biologische Masse auf einem transparenten Substrat (etwa ein Glasobjektträger) und wird durch dieses Substrat hindurch von hinten mit einem Laser bestrahlt. Hierbei handelt es sich meistens um einen UV-Laser, da diese Strahlung von biologischen Materialien gut absorbiert wird. Durch die Laserbestrahlung wird eine Probe der Masse herausgeschnitten und danach durch einen auf die Probenunterseite gerichteten "Transportpuls" direkt aufgeheizt und teilweise verdampft. Die laserinduzierte Dampfexpansion dient hier als Triebkraft des Transports. Das Katapultieren direkt von Glas ist allerdings schädlich für das biologische Material (Vogel A et al. (2007) Mechanisms of Laser-Induced Dissection and Transport of Histologic Specimens, Biophysical Journal 93: 4481-4500), da im bestrahlten Areal thermomechanische Schädigungen auftreten und die UV-Strahlung in hoher Dosis auf das Material einwirkt. Die Ausbeute an verwertbarem DNA-Material für eine RT-PCR Analyse ist um etwa einen Faktor 100 geringer als mit Verfahren, die eine Unterstützung des Katapultierens vorsehen.

Eine Möglichkeit, Biomaterial mit geringem Materialverlust und ohne große thermische Schäden zu transportieren besteht darin, einen Femtosekundenlaser zu verwenden (I. Zergioti, A. Karaiskou, D. G. Papazoglou, C. Fotakis, M. Kapsetaki, D. Kafetzopoulos (2005) "Femtosecond laser microprinting of biomaterials", Appl. Phys. Lett. 86, 163902). Um Materialverlust und Materialschäden weiter zu minimieren, werden Dynamic Release Layer (DRL), auch "sacrificial layer" genannt, benutzt. Diese werden zwischen dem Substrat und dem zu transportierenden Material angeordnet und dienen ausschließlich dazu, durch Absorption von Laserstrahlung die für den Materialtransport benötigte kinetische Energie bereitzustellen. Sie werden dabei gewöhnlich zerstört (verdampft oder anderweitig in Gasform überführt). Wenn die Zwischenschicht hinreichend dick ist und genügend stark absorbiert, wird nur die laserzugewandte Seite verdampft, und der Rest lediglich stark verformt (ausgebeult). Die Ausbeulung führt zu einem Impulsübertrag an das darüber liegende Material, welcher es gewissermaßen "abwirft" (N.T. Kattamis, P. E. Purnick, R. Weiss, C. B. Arnold (2007) "Thick film laser induced forward transfer for deposition of thermally and mechanically sensitive materials", Appl. Phys. Lett. 91, 171120).

Durch das hohe Absorptionsvermögen der DRL ist die biologische Probe oft recht gut vor der schädlichen UV-Strahlung des Lasers geschützt, ein Wärmeschutz ist jedoch nicht gegeben, weil die bei der Verdampfung der DLR erzeugte Wärme leicht in die unmittelbar benachbarte Probe diffundieren kann. Überdies bewirkt die explosionsartige Zerstörung bzw. die schlagartige Ausbeulung des DRL in unmittelbarer Nachbarschaft des biologischen Materials mechanische Kräfte, die zum Zerreißen der transportierten Probe führen können. Gemeinsames Kennzeichen der genannten DRL-Verfahren ist ferner, dass das transportierte Areal - also der Durchmesser der Probe - in etwa der Größe des bestrahlten Fleckes entspricht.

Um Proben zu transportieren, deren Fläche deutlich größer als der bestrahlte Fleck ist, bedarf es insbesondere bei mechanisch schwachen oder empfindlichen Proben einer stabilisierenden Unterstützung.

Die DE 196 03 996 C2 offenbart ein Verfahren zum Separieren und Sortieren von biologischen Objekten, die auf einem planaren Träger angeordnet sind, wobei ein Objektfeld des Trägers, auf dem sich ein selektiertes biologisches Objekt befindet, mit einem Laserstrahl ausgeschnitten und sodann laserinduziert transportiert wird. Der Träger wird also als Bestandteil der Probe behandelt und mit ihr katapultiert. Die biologische Probe wird durch die mechanische Stabilität des Trägers vor und während des Transports gestützt. Zudem wird der Laserpuls, der den Transport auslöst, auf den Träger gerichtet, der durch lokale Verdampfung die erforderliche Energie zur Beschleunigung des Dissektats freisetzt. Die biologische Probe selbst, die sich im Innern einer geschlossenen Laserschnittlinie befindet, die ein Areal sehr viel größer als der Laserfleck umschließen kann, wird in allen Bereichen außerhalb des Laserfokus von der UV-Strahlung und der Wärmeentwicklung im Laserfokus nicht beeinträchtigt.

Der Träger aus der DE 196 03 996 C2 ist heute kommerziell erhältlich und besteht aus einer dünnen Folie aus Polyethylen-2,6-naphthalat (PEN). Die PEN-Folie ist nur an ihren Rändern auf dem Objektträger fixiert, wodurch die Proben nach Ausschneiden der relevanten Bereiche des Gewebes lose aufliegen und sehr leicht zu katapultieren sind. Die fehlende Haftung der Folie und ihr hohes Absorptionsvermögen im Bereich der Laserwellenlänge gestatten, das Dissektat auch bei Beleuchtung nur eines Bruchteils der ausgeschnittenen Fläche zu katapultieren.

Mit Hilfe der PEN-Folien-Technik können Dissektate katapultiert werden, die deutlich größer als der Laserfleck in der Probenebene sind. Insbesondere kann man einzelne Zellen als Ganzes oder sogar zusammenhängende Zellcluster aus dem biologischen Material separieren. Dies bietet die Möglichkeit, auch lebende Zellen zu katapultieren, z.B. um diese weiter zu kultivieren.

Allerdings ist die Verwendung der PEN-Folie nicht ohne Nachteile. Durch die Folie wird die optische Abbildungsleistung verringert (und damit z.B. die Erkennbarkeit histologischer Details). Streuung und Doppelbrechung begrenzen die Möglichkeit der optischen Kontrastierung durch Phasen- oder Interferenzkontrast. Ferner besitzt die Folie eine erhebliche Autofluoreszenz im blaugrünen Spektralbereich, sodass grüne Immunfluoreszenz zur Erkennung relevanter Gewebebereiche nur bedingt und blaue überhaupt nicht angewendet werden kann.

Häufig wird die Folie nicht komplett geschnitten und klappt beim Katapultierprozess lediglich um, sodass kein Gewebe in die Auffangvorrichtung gelangt. In der Praxis ist somit keine Automatisierung der Gewinnung histologischen Materials möglich, da es einer ständigen Kontrolle bedarf, ob auch alle zu katapultierenden Dissektate tatsächlich katapultiert wurden.

Vor allem aber zeigt die Folie eine schlechte Planlage, welche nach Durchlaufen der histologischen Bäder und Färbelösungen noch weiter verschlechtert wird, so dass bei der praktischen Anwendung ständig nachfokussiert werden muss. Dieses Problem ist hauptsächlich der Tatsache geschuldet, dass die PEN-Folie im Innenbereich nicht am Objektträger anhaftet, von diesem also auch nicht in Position gehalten werden kann, da sie sonst nicht zu katapultieren wäre. Zwar befasst sich die EP 1 309 846 B1 mit diesem Problem und schlägt vor, die PEN-Folie unmittelbar auf einer für Laserlicht durchlässigen Trägermembran anzuordnen und beide zusammen z.B. in einem Halterahmen einzuspannen, um die Planlage zu verbessern. Die PEN-Folie und die Trägermembran werden lediglich in ihren Randbereichen aneinander befestigt. Sobald Areale der PEN-Folie im Innenbereich geschnitten werden, ist jedoch mit mechanischer Relaxation der gespannten und nunmehr beschädigten PEN-Folie zu rechnen, die erneut eine Wellung bewirken kann.

Weitere Verfahren sind aus der US 2004/0077073 A1, der EPO 926 480 A3 und aus Nagel M et al "Aryltriazene photopolymer thin films as sacrificial release layers for laser-assisted forward transfer systems: study of photoablative decomposition and transfer behaviour", Appl. Phys. A, 22.05.2008, 92: 781-789 bekannt.

Es ist nun die Aufgabe der Erfindung, ein Transportsystem für das zu katapultierende biologische Material bereitzustellen, das die biologische Probe vor thermischer Schädigung und vor der Laserstrahlung selbst schützt und den Transport von im Vergleich zum Laserfleck großen Proben ermöglicht, wobei zugleich eine gute Planlage des Materials gewährleistet wird.

Die Aufgabe wird gelöst durch ein Transportsystem mit den Merkmalen des Anspruchs 1. Die Unteransprüche geben vorteilhafte Ausgestaltungen an.

Erfindungsgemäß soll das Transportsystem ein stabiles, für Laserlicht transparentes Substrat und eine auf diesem ganzflächig anhaftende Funktionsschicht umfassen. Das Substrat ist vorzugsweise ein herkömmlicher Glasobjektträger. Die Haftung zwischen Funktionsschicht und Substrat garantiert eine gute Planlage. Die Funktionsschicht ist zwischen 1 und 10 Mikrometer dick und unterteilt sich in wenigstens zwei übereinander angeordnete Teilschichten. Unmittelbar auf dem Substrat ist die erste Teilschicht, i. F. als Treiberschicht bezeichnet, angeordnet. Die Treiberschicht hat im Wesentlichen die Aufgabe eines Dynamic Release Layers (DRL) und ist entsprechend beschaffen, d.h. sie besitzt hohes Absorptionsvermögen für das Laserlicht und ist in der Lage, durch laserinduzierte Gasfreisetzung lokal zu expandieren. Auf der Treiberschicht ist erfindungsgemäß die von nun ab als Trägerschicht bezeichnete zweite Teilschicht angeordnet. Auf der Trägerschicht kann das biologische Material aufgebracht werden, um dieses zu katapultieren.

Die Besonderheit des Transportsystems besteht darin, dass die erfindungsgemäß vorgesehene Trägerschicht den Schutz der auf ihr befindlichen biologischen Probe vor thermischer Schädigung und/oder Schädigung durch Laserstrahlung garantiert, während die Triebkraft für den Katapultiervorgang in einem von der biologischen Probe beabstandeten Bereich der erfindungsgemäßen Funktionsschicht, nämlich der zwischen Trägerschicht und Substrat angeordneten Treiberschicht, erzeugt wird. Dabei kann die Probe zusammen mit der Trägerschicht wie im Stand der Technik immer noch geschnitten werden, um interessierende Bereiche der Probe zu selektieren und zu separieren. Das Abheben einer separierten Probe zusammen mit dem darunter befindlichen, ausgeschnittenen Element der Trägerschicht ist nun möglich, weil die Treiberschicht ausreichend eingestrahlte Energie in mechanische Arbeit umsetzt, um das Abheben der Trägerschicht von der Treiberschicht auch in der Umgebung des Laserflecks zu bewirken, ohne dass die Trägerschicht einreißt. Die erfindungsgemäß vorgesehen Haftung der Trägerschicht auf der Treiberschicht, die eine vereinfachte Inspektion und Bearbeitung der Probe gegenüber dem Stand der Technik ermöglicht, wird beim Katapultiervorgang lokal und auch außerhalb des direkt vom Laser bestrahlten Areals der Treiberschicht überwunden. Für das Katapultieren beliebig geformter Dissektate ist daher - im Unterschied zu gängigen DRL-Verfahren - keine vollständige Bestrahlung des zu transportierenden Gebietes und somit auch keine Anpassung des Laserflecks erforderlich.

Die Erfindung wird zunächst näher erläutert anhand der folgenden Figuren. Dabei zeigt:

Fig. 1: eine Skizze des Transportsystems (a) nach dem Stand der Technik und (b) gemäß der Erfindung;

Fig. 2: eine Skizze des Katapultierprozesses mit dem erfindungsgemäßen Transportsystem.

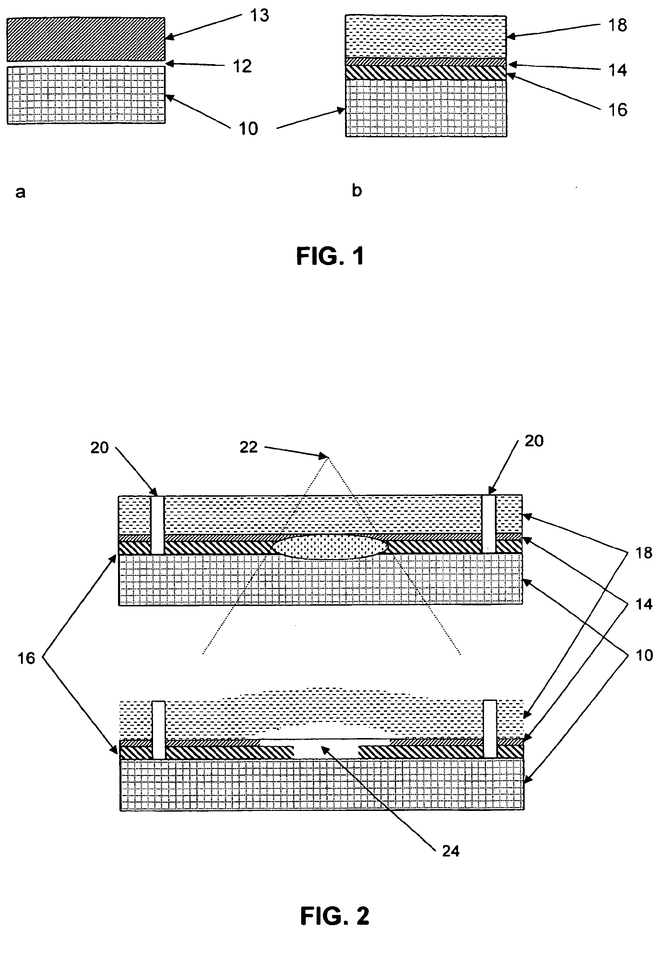

In Fig. 1 a) ist schematisch die bekannte PEN-Folie 13 angeordnet auf einem Glasobjektträger 10 dargestellt. Das Laserlicht wird durch den Glasträger 10 auf die Folie 13 eingestrahlt, in der Folie 13 fokussiert, um diese zu schneiden, und unmittelbar nach dem Abseparieren durch einen Laserpuls (in der Zeichnung nach oben) katapultiert. Dabei ist die Folie 13 lediglich über dem Glasträger 10 eingespannt und haftet nicht an diesem, wie der gezeichnete Zwischenraum 12 andeuten soll. Fig. 1 b) stellt das erfindungsgemäße Transportsystem direkt gegenüber. Die Treiberschicht ist hier exemplarisch in zwei Teilen dargestellt, einer Absorberschicht 16 für Laserlicht und einer direkt darüber befindlichen Schicht 14 aus einem bei Temperaturerhöhung Gas freisetzenden Material. Diese Schicht 14 haftet, zusammen mit der Absorberschicht 16, ganzflächig auf dem Glasobjektträger 10 (Substrat). Ihre Aufgabe ist die Umsetzung eingestrahlter Energie in mechanische Arbeit durch Expansion, weshalb sie nachfolgend als Expansionsschicht bezeichnet werden soll.

Für die Expansionsschicht 14 kommen prinzipiell alle Materialien in Betracht, die unter Erwärmung und/oder Lichteinstrahlung Gase freisetzen, darunter insbesondere wasseradsorbierende Materialen (Mikrogele), z.B. Polyelektrolyt-Multilayer (PEM), Polyacrylsäuren oder auch anorganische Salze, z.B. Silbernitrat, sowie Triazene und andere Verbindungen, die leicht Stickstoff abspalten und sogar Nitrocellulose, also Sprengstoffe. Es ist aber dabei zu bedenken, dass der laserinduzierte Transport selektiv bleiben soll und deshalb grundsätzlich nur eine klar lokalisierte Gasfreisetzung wünschenswert ist. Exotherm reagierende Materialien könnten zu einer Kettenreaktion in der gesamten Treiberschicht führen. Solange die exotherme Reaktion aber unter Kontrolle bleibt - also insbesondere die freigesetzte Energie nicht zur Aktivierung der Umgebung ausreicht - kann das Vorsehen einer solchen Schicht durchaus förderlich sein, da dies die Gasentwicklung/Druckaufbau unterstützt und so prinzipiell dünnere Schichten genutzt werden können.

Im Folgenden soll davon ausgegangen werden, dass das Material der Treiberschicht lediglich die Energie des auslösenden Laserpulses für die Gasfreisetzung zur Verfügung hat. Dies ist insbesondere dann der Fall, wenn das Gas durch die Verdampfung von Wasser entsteht, das in der Schicht gebunden ist. Besonders geeignet sind Polyelektrolyt-Multilayer (PEM), die auch exemplarisch im Ausführungsbeispiel erläutert werden.

Die Absorberschicht 16 kann ebenfalls auf vielen möglichen Materialien basieren. Vorteilhaft sind Schichten aus Zinkoxid oder Titanoxid, aber auch Ceroxide, Zinnoxide oder Mischoxide (Indium-Zinnoxid) kommen in Betracht. Ebenso sind dünne Metallschichten (z.B. Silber, Gold, Titan, Chrom) geeignet.

Auf der aus Absorberschicht 16 und Expansionschicht 14 bestehenden Treiberschicht zeigt Fig. 1b) die erfindungsgemäße Trägerschicht 18. Um thermische Schädigung des biologischen Materials (in den Figuren nicht dargestellt) beim Auslösen der Treiberschicht sicher zu vermeiden, soll die Trägerschicht 18 nicht weniger als 1 Mikrometer dick sein. In Analogie zur PEN-Folien-Technik ist es erfindungsgemäß vorgesehen, dass Teile der Trägerschicht zusammen mit dem selektierten biologischen Material in die Auffangvorrichtung katapultiert werden. Die biologische Probe wird dabei praktisch "auf einem Tablett liegend" mitsamt diesem transportiert, wobei das "Tablett" nun allerdings bis zum Einleiten des Transportvorgangs fest auf dem stabilen Substrat haftet. Diese Haftung, die sich aus der Adhäsion zwischen Träger- und Treiberschicht sowie zwischen Treiberschicht und Substrat ergibt, muss beim Auslösen des Katapultierens im Unterschied zur PEN-Folien-Technik überwunden werden.

Versuche mit einem erfindungsgemäßen Testsystem (siehe Ausführungsbeispiel) zeigen, dass sich Areale der Trägerschicht ablösen und katapultieren lassen, die deutlich größer als der Laserfleck sind, der die Expansion der Treiberschicht auslöst. Dadurch ist es möglich, lebende Zellen und/oder Zellcluster als Ganzes sehr schonend zu transportieren. Wenn die Expansion der Treiberschicht mehr oder weniger genau unter dem Schwerpunkt des zu transportierenden Areals ausgelöst wird, verringert dies die Wahrscheinlichkeit einer heftigen Rotation der Probe während ihres Fluges.

Bei der laserinduzierten Verdampfung der Treiberschicht zum Auslösen des Katapultierens wird in einem eingeschlossenen Volumen ein sehr hoher Druck erzeugt. Die Trägerschicht muss diesem Druck standhalten ohne zu zerreißen, damit die notwendige Arbeit zum lokalen Ablösen der Trägerschicht verrichtet werden kann und der Schutz der Probe gewährleistet bleibt.

Es ist hierdurch zugleich erfindungsgemäß vorgegeben, dass keine Fragmentierung der Trägerschicht allein durch irgendein lokales Auslösen der Treiberschicht hervorgerufen werden soll. Die Trägerschicht muss vielmehr in einem separaten Arbeitsgang vor dem Katapultieren geschnitten werden, damit sich größere vereinzelte Trägerschichtareale in einem Stück transportieren lassen. Besonders bevorzugt soll dies gleichzeitig mit dem im Stand der Technik bereits bekannten und auch hier zweckmäßigen Separieren der biologischen Probe von ihrer Umgebung durch Laserschneiden erfolgen. Die Trägerschicht soll daher vorzugsweise ein Absorptionsvermögen für die verwendete Laserstrahlung aufweisen, die das Schneiden der Trägerschicht bei entsprechender Fokussierung des Laserstrahls erlaubt.

Fig. 2 zeigt den Katapultiervorgang mit dem erfindungsgemäßen Transportsystem schematisch. Im oberen Bild weist die gesamte Katapultierschicht 14, 16, 18 bereits Einschnitte 20 auf, die durch Schneiden mit dem fokussierten Laserlicht erzeugt worden sind. Dabei wurde die Treiberschicht sehr wohl ausgelöst, aber die lokale Gasfreisetzung blieb für den Transport der Probe wirkungslos, weil das Gas durch die zugleich darüber verdampfte Trägerschicht entweichen konnte. Die beiden Einschnitte 20 repräsentieren die Querschnittdarstellung einer geschlossenen Schnittlinie, die in der Schichtebene (senkrecht zur Bildebene) verläuft. Ein Element der Trägerschicht zusammen mit dem darauf liegenden Probenelement (nicht dargestellt) ist also bereits separiert, haftet aber noch an der darunter liegenden Treiberschicht. Die gestrichelten Linien 22 deuten den Strahlengang des Laserlichts an, das hier oberhalb der Trägerschicht fokussiert wird. In der Ebene der Treiberschicht ist der Strahl also defokussiert, um dort einen größeren Querschnitt zu aktivieren. Das Ausmaß der maximal möglichen Defokussierung richtet sich nach der minimalen Energie, die pro Volumenelement der Treiberschicht eingestrahlt werden muss, um diese zu aktivieren (z.B. um einen Temperaturanstieg von 100 °C zu erzielen zur Verdampfung des eingelagerten Wassers). Der Aktivierungsbereich wird in Fig. 2 oben durch eine Ellipse angedeutet, welche die beginnende lokale Expansion der Treiberschicht illustrieren soll. Das untere Bild zeigt das Transportsystem unmittelbar nach der Aktivierung. Ein Anteil der eingestrahlten Energie hat die Bildung einer Gasblase 24 und die weitgehende Zerstörung der Treiberschicht bewirkt. Die Gasblase verrichtet nun mechanische Arbeit an der Trägerschicht 18 - angedeutet durch die Durchbiegung des herausgeschnittenen Elements, das nur noch an seinen Rändern anhaftet. Diese mechanische Arbeit überwindet die verbliebene Adhäsion des Elements und beschleunigt es schließlich nach oben. Es wird katapultiert, während das zuvor eingeschlossene Gas entweicht.

Es ist möglich und insbesondere für Automatisierungszwecke - z.B. für das automatische Einsammeln großer, zusammenhängender Bereiche, die nicht als ein Stück katapultiert werden können - vorteilhaft, die Trägerschicht bereits werkseitig nach der Herstellung in einzelne Elemente zu unterteilen - z.B. durch einen Stanzprozess oder dergleichen - und so das erfindungsgemäße Transportsystem mit festgelegten, vorab bekannten Sollbruchstellen zu versehen. Die einzelnen Elemente einer solchen zuvor unterteilten Trägerschicht sind dann typisch gleich groß und gleichmäßig entlang der Schichtebene verteilt. Beim Abheben eines Elements durch den Katapultiervorgang kann das auf der Trägerschicht liegende biologische Material durch die Beschleunigung des Elementes an den Elementkanten von der umgebenden biologischen Masse getrennt werden.

Durch Verwendung eines Mehrschichtsystems können die verschiedenen Funktionen und Eigenschaften der Beschichtung separat eingestellt werden. Die Treiberschicht absorbiert die Laserstrahlung, und die damit verbundene Wärmeentwicklung verursacht eine Gasentwicklung und einen Druckanstieg unterhalb der Trägerschicht, wodurch eine treibende Kraft erzeugt wird. Da ihr Hauptzweck die Überführung von Laserenergie in mechanische Energie ist, kann man einen Wirkungsgrad definieren, der das Verhältnis zwischen der verrichteten mechanischen Arbeit und der in der Treiberschicht absorbierten Energie beziffert. Dieser Wirkungsgrad ist prinzipiell messbar und ein Kennzeichen des Treiberschichtmaterials.

Eine Methode, den Wirkungsgrad experimentell zu ermitteln, besteht darin, unterschiedlich große aber ansonsten gleichförmige Elemente aus der Trägerschicht herauszuschneiden, diese zu katapultieren und dabei ihre initiale Bewegungsenergie zu bestimmen. Vorzugsweise wird man Kreisscheiben schneiden und diese durch Verdampfung eines Areals der Treiberschicht unter dem Zentrum einer Kreisscheibe katapultieren. Die Startgeschwindigkeit des Elements kann z.B. mittels Kurzzeitfotographie gemessen werden. Es gilt der Zusammenhang

$$(1) \qquad E_{Las} * \Omega * (1-T) = W_{Adh} + E_{trans} + E_{rot}$$

mit $E_{Las}$ als Energie des einzelnen Laserpulses, mit dem katapultiert wird, $\Omega$ als Wirkungsgrad der Treiberschicht für die Umsetzung von absorbierter Energie in mechanische Energie, $T = \exp(-\alpha d)$ als Transmission der Treiberschicht ($\alpha$ - Absorptionskoeffizient, d-Schichtdicke), $W_{Adh}$ als zu verrichtende mechanische Arbeit zur Überwindung der Adhäsion des Elements und $E_{trans}$ und $E_{rot}$ als Translations- und Rotationsanteile der Bewegungsenergie des Elements unmittelbar nach dem Start. $E_{trans}$ ist direkt berechenbar aus der Masse des Elements und der gemessenen Startgeschwindigkeit (Reibung wird vernachlässigt). $E_{rot}$ ist aus einem einzelnen Schuss kaum bis gar nicht ablesbar, allerdings darf von einer erheblichen Streuung der Werte zwischen den Schüssen ausgegangen werden, insbesondere kann $E_{rot}$ auch praktisch Null werden. Folglich führt man für eine bestimmte Elementgröße eine große Zahl von Schüssen durch und nimmt dann das gefundene Maximum von $E_{trans}$ als Wert für die Summe $E_{trans} + E_{rot}$.

Über $W_{Adh}$ kann man sich über einen so genannten Peel-Test Klarheit verschaffen. Die Adhäsion K ist definiert als Kraft pro Länge der Ablöselinie und kann über die Zugkraft an einem auf der Schicht aufgeklebten Klebestreifen gemessen werden, mit dem man die Schicht vom Substrat abhebt. Die Adhäsion hat die Dimension N/m oder wahlweise $J/m^2$, d.h. sie ist die erforderliche Arbeit, die zu leisten ist, um eine bestimmte Fläche der Schicht zu entfernen.

Für die oben genannten Kreisscheiben verschiedener Größe sind die Haftflächen vor und während des Laserschusses (dann reduziert um das vom Laser verdampfte Areal der Treiberschicht) genau bekannt, und folglich kann $W_{Adh}$ aus einem einzelnen Peeltest für alle Elemente berechnet werden. Mit der bekannten Pulsenergie des UV-Lasers ist somit ein Rückschluss auf den Wirkungsgrad Ω der Treiberschicht experimentell möglich.

Die Treiberschicht kann, wie schon erwähnt, auf viele verschiedene Arten realisiert werden. Sie sollte so dünn wie möglich ausgelegt werden und vorzugsweise weniger als 1 Mikrometer, besonders bevorzugt sogar weniger als 200 Nanometer, dick sein. Es werden keine anderen Anforderungen als Absorptionsvermögen für Laserlicht, vorzugsweise UV-Licht, und Freisetzung von Gas durch Verdampfung oder Zerfall an sie gestellt.

Da gute Lichtabsorber oft sehr hohe Phasenübergangstemperaturen aufweisen, ist es erfindungsgemäß sehr vorteilhaft, für die Treiberschicht ein Kompositsystem vorzusehen, in dem die Aufgaben von Absorption und Gasfreisetzung von verschiedenen Komponenten wahrgenommen werden. Die einfachste Möglichkeit ist das Vorsehen einer Treiberschicht, die in eine Absorberschicht und eine Expansionsschicht unterteilt ist. Ebenso ist aber möglich, in die Expansionsschicht z.B. während der Herstellung Licht absorbierende Nanopartikel (z.B. ZnO-Partikel) einzubetten, also ein Nanokomposit zu erzeugen.

Für jede Treiberschicht kann z.B. wie oben beschrieben ein Wirkungsgrad bestimmt werden. Dabei ist aber der größte Wirkungsgrad nicht unbedingt maximal vorteilhaft für das erfindungsgemäße Transportsystem. Er muss, zusammen mit der Dicke d, vielmehr abgestimmt sein auf die Trägerschicht, damit sowohl der Transport als auch die mechanische Integrität der Probe gewährleistet sind

Als Trägerschicht dient erfindungsgemäß vorzugsweise eine Lackschicht, insbesondere ein Acryllack. Es kommen aber auch andere Materialien in Betracht, wenn sie folgende Anforderungen erfüllen:

(i) Die Trägerschicht muss eine gute Abbildung sicherstellen und hierfür optisch homogen sein, d.h. nur eine geringe Streuung aufweisen und möglichst keine Doppelbrechung zeigen. Vor dem eigentlichen Selektieren und Katapultieren der biologischen Probe wird diese optisch inspiziert, was durchaus auch durch die Katapultierschicht hindurch möglich sein sollte. Überdies soll auch der Strahlengang des Laserlichts möglichst wenig beeinträchtigt werden. Die Trägerschicht soll überdies nicht fluoreszieren, um den im Stand der Technik genannten Nachteil der PEN-Folien (keine Immunfluoreszenz zur Erkennung relevanter Gewebebereiche möglich) zu überkommen. Eine dünne Trägerschicht ist hierfür wünschenswert, solange thermischer Schutz und mechanische Integrität der Probe gewährleistet bleiben.

(ii) Sie muss sich durch den benutzten Laser gut schneiden lassen. Dafür sollte sie eine UV-Absorption aufweisen, die durchaus gering sein kann. Laserpulsenergien der Größenordnung nJ reichen völlig aus, um z.B. Wasser in einem typischen Laserfokus von $10^{-19}$ $m^3$ zu verdampfen. Kommerzielle LPC-Systeme sind mit Lasern ausgestattet, die üblich deutlich höhere Pulsenergien im Mikrojoulebereich ($\geq$ 10 $\mu$J) abliefern. Von daher ist ein Absorptionsvermögen der Trägerschicht von ca. 1-5 % der eingestrahlten Energie über die Schichtdicke zum Schneiden ausreichend. Sofern das für die Trägerschicht gewählte Material selbst keine UV-Absorption besitzt, können UV-absorbierende Moleküle oder Nanopartikel in die Precursor-Lösung vor dem Aufbringen der Trägerschicht gegeben werden. Ein UV-Absorptionsvermögen der Trägerschicht ist natürlich verzichtbar, wenn sie wie oben gesagt vom Hersteller bereits vereinzelt (z.B. gestanzt) ausgeliefert wird.

(iii) Die Trägerschicht soll gegenüber organischen Lösemitteln und wässrigen Lösungen unterschiedlicher pH-Werte chemisch inert sein, um kompatibel zu etablierten histologischen Verfahren (Entparaffinieren, Immunfärbungen) zu sein. Zudem soll sie, ebenso wie eventuell mittransportierte Teile der Treiberschicht, die nachfolgende Analyse der transportierten biologischen Probe nicht beeinflussen.

(iv) Für das Arbeiten mit lebenden Zellen sollte die Trägerschicht eine gute Adhäsion für Zellen besitzen. Ist das nicht der Fall, kann sie konditioniert werden, z.B. durch eine Polylysinbeschichtung oder durch eine Behandlung mit einem Plasma CVD-Verfahren.

Die vorgenannten Anforderungen, insbesondere auch (i) und (iii), lassen immer noch eine große Auswahl an Materialien zu. Hierin liegt ein wesentlicher Vorteil der Erfindung. Eine weitere Einschränkung der Materialauswahl ergibt sich allerdings daraus, dass die Wahl des Trägerschichtmaterials auch die Festigkeit der Schicht sowie ihre Haftung auf der darunter befindlichen Treiberschicht bedingt. Beides muss gegenüber dem Wirkungsgrad der Treiberschicht angemessen eingerichtet werden.

Die maximal zulässige Adhäsion zwischen Treiber- und Trägerschicht ergibt sich erneut aus der Energieerhaltungsgleichung (1), wenn man festlegt, welche maximale Dissektatgröße man noch katapultieren können will. Erfahrungsgemäß werden Laserpulse mit etwa 10 $\mu$J Energie benutzt, um lose Präparate von 100 $\mu$m Durchmesser und 5-10 $\mu$m Dicke zu katapultieren.

Wenn das Dissektat eine Kreisscheibe mit Radius R sein soll, muss $E_{Las}$ * Ω * (1-T) gerade genug Energie liefern können, um die vollständige Ablösung zu ermöglichen. Im Grenzfall, wenn eine Ablösung gerade noch erfolgen kann, ist also in Gleichung (1) $E_{trans}$ + $E_{rot}$ = 0, und die Adhäsion K beträgt

$$(2) \qquad K = \frac{E_{Las}\Omega(1-T)}{\pi\left(R^2 - R_0^2\right)},$$

wobei $R_0$ den Radius des verdampften Treibermaterials bezeichnet, mithin also die Laserfleckgröße beim Auslösen des Katapultierens. Realistische Werte sind etwa wie folgt:

| Dissektatgröße: | $R = 50\ \mu m$ |
|---|---|
| Laserfleck: | $R_0 = 15\ \mu m$ |
| Pulsenergie: | $E_{Las} = 10\ \mu J$ |
| Wirkungsgrad: | $\Omega = 0,1\ bis\ 0,5$ |

Die größte überwindbare Adhäsion ergibt sich hiernach, für $\Omega = 0.5$, zu K = 700 N/m.

Beim Schneiden der Trägerschicht verwendet man typisch Pulsenergien von ca. 300 nJ. Kleine Dissektate sollen beim Schneiden nicht umklappen geschweige denn wegfliegen. Somit ergibt sich eine Untergrenze für die Adhäsion von ca. 20 N/m. Unterhalb dieses Bereiches wäre auch ein Bearbeiten des Präparates in histologischen Bädern ohne ein Ablösen schwer möglich.

Die Adhäsion der Trägerschicht auf der Treiberschicht bzw. der Treiberschicht auf dem Substrat sollte also bevorzugt zwischen 20 und 700 N/m betragen. Dabei sei wohl verstanden, dass es durchaus vorkommen kann, dass sich die Adhäsion der Treiberschicht auf dem Substrat als kleiner erweist als jene zwischen Treiberschicht und Trägerschicht. In diesem Fall wird ein Stück der Treiberschicht mitkatapultiert. Für den Katapultiervorgang selbst spielt dies keine Rolle, denn die Hauptmasse des Dissektats wird durch das biologische Material gebildet, das als eine typisch 5-10 $\mu m$ dicke Schicht auf der Trägerschicht liegt. Die Mitnahme eines Treiberschichtfragments, das z.B. vornehmlich Wasser enthält und weniger als 1 $\mu m$ dick ist, beeinflusst die Trajektorie kaum. Sinngemäß ist die obige Angabe für das Adhäsionsintervall also auf jene Grenzfläche zu beziehen, entlang der sich die Katapultierschicht leichter vom Substrat lösen lässt. Dies wird zumeist die Grenzfläche zwischen Träger- und Treiberschicht sein, was auch bevorzugt ist.

Schließlich bedingen die tatsächlich zu überwindende Haftung, die Größe des Laserflecks und die in der Treiberschicht bereitgestellte mechanische Energie (also absorbierte Pulsenergie mal Wirkungsgrad) auch die minimal erforderliche Festigkeit der Trägerschicht. Die maßgeblich zu betrachtende Größe hierfür ist die Schlagzähigkeit, die die Fähigkeit eines Materials beschreibt, Energie aufzunehmen ohne zu brechen. Die gängige technische Einheit ist $kJ/m^2$.

Der Ablösevorgang geht mit einer adiabatischen Gasexpansion in der Treiberschicht ausgehend vom Laserfleck einher. Womöglich wird dabei die Trägerschicht auch etwas gewölbt. Daher treten sowohl Zugkräfte als auch, vor allem am Rande des bestrahlten Flecks, Scherkräfte auf. Die höchste Beanspruchung der Trägerschicht besteht unmittelbar nach dem Laserpuls, wenn das verdampfte Material eine Gasblase mit einem Innendruck in der Größenordnung 1 GPa hervorruft. Die Belastung ist allerdings kurzzeitig und mit einem Schlag vergleichbar.

Um ein Dissektat mit Durchmesser 100 $\mu m$ (siehe oben) mit einer mechanischen Energie von 5 $\mu J$ abzuheben und dabei den größten Widerstand (Adhäsion 700 N/m) noch zu überwinden, muss die Trägerschicht im Extremfall in der Lage sein, den gesamten Energieeintrag auf der Fläche des Laserflecks unbeschadet zu überstehen. Dies führt auf eine erforderliche Schlagzähigkeit von ca. 7 $kJ/m^2$ für die Trägerschicht, um ein Zerreißen sicher auszuschließen.

Übliche Dissektatgrößen beim Laser Pressure Catapulting liegen bei 40 $\mu m$ Durchmesser bei einem Laserfleckdurchmesser von 30 $\mu m$. Eine typische Adhäsion der Trägerschicht auf der Treiberschicht ist in der Größenordnung um 100 N/m zu erwarten. Die Ablösearbeit liegt in diesem Fall ungefähr bei 50 nJ.

Diese Größenordnung der erforderlichen Schlagzähigkeit stellt an sich keine große Anforderung dar, d.h. es gibt etliche bekannte Materialien, die sich als Trägerschicht anbieten, z.B. PMMA (> 10 $kJ/m^2$). Jedoch werden Schlagzähigkeitsmessungen gewöhnlich an makroskopischen Proben mittels Pendelhammer durchgeführt. Ob die Messergebnisse immer auch auf dünnen Schichten bis 10 $\mu m$ übertragen werden können, ist zumindest fraglich. Gleichwohl dürfte obige Abschätzung einen Hinweis auf geeignete Materialien geben.

Neben der Schlagzähigkeit erweist sich denn auch die gewählte Dicke der Trägerschicht als zu beachtender Parameter für den Transport. Eine experimentelle Messreihe an einem Substrat mit einer Treiberschicht, auf der eine Trägerschicht variabler Dicke angeordnet ist, zeigt, dass die kleinste für einen erfolgreichen Katapultiervorgang benötigte Laserpulsenergie erheblich geringer für ein 2 $\mu m$ dickes Fragment der Trägerschicht ist als für eines mit nur 1 $\mu m$ Dicke. Dies erscheint zunächst etwas widersinnig, aber die Erklärung wird im teilweisen Entweichen des freigesetzten Gases durch die Trägerschicht hindurch bei der dünneren Trägerschicht vermutet. Dadurch dürfte ein Anteil der eingestrahlten Energie für die zu verrichtende Ablösearbeit verloren gehen.

Ausführungsbeispiel zur Herstellung einer erfindungsgemäßen Funktionsschicht

Zur Dissektion und zum Katapultieren wird ein UV-A Laser verwendet, der Pulse mit einer Wellenlänge von 355 nm und etwa 1 ns Dauer emittiert.

Erfindungsgemäß bevorzugt wird die Treiberschicht aus einer UV-Absorberschicht und einem Polyelektrolyt-Multilayer (PEM) gebildet. PEM liegen als Polymerketten vor, die aufgrund ihrer funktionellen Gruppen wasserlöslich sind. Beim Lösen in Wasser dissoziieren die Gruppen in Ionen, und die Polymerkette ist somit elektrisch geladen. Zur Herstellung eines PEM wird das Substrat abwechselnd in das Polykation und in das Polyanion getaucht. In wässriger Lösung ist die Substratoberfläche ebenfalls geladen, was es ermöglicht, die Polyelektrolyte zu adsorbieren. Bei der Adsorption der Polymerketten kommt es zu einer Ladungsüberkompensation auf der Oberfläche, da nicht alle Ionen einen Gegenpart finden, bzw. die Adsorption schneller abläuft als die Umlagerung. Durch die Ladungsüberkompensation ist es nun möglich, einen weiteren Polyelektrolyten mit entgegen gesetzter Ladung adsorbieren zu lassen, wodurch sich die Ladung der Oberfläche wiederum umkehrt. Z.B. über Wasserstoffbrückenbindung wird Wasser in die Schichten gebunden. Gibt man während des Adsorptionsprozesses Salze zu den Polyelektrolytlösungen, kann man die Eigenschaften der Schichten noch einmal verändern. Das zugesetzte Salz lagert sich an die Polymere an. Die Polymere "knäueln" sich nun wieder stärker, da die funktionellen Gruppen elektrostatisch voneinander abgeschirmt werden. Die gebildeten Schichten werden bei gleicher Anzahl von Tauchvorgängen dicker, da die Ketten stärker "geknäult" sind. Gleichzeitig ist auch mehr Wasser an den Ketten angelagert.

Zur exemplarischen Herstellung eines erfindungsgemäßen Transportsystems wird zunächst ein Glassubstrat (Objektträger) durch Hohlkathoden-Gasfluss-Sputtern mit 100 nm Zinkoxid (ZnO) beschichtet. Auf das ZnO werden dann mittels Tauchbeschichtung zehn Doppelschichten aus Polyelektrolyten (PDADMAC = Polydiallyldimethylammoniumchlorid und PSS = Polystyrensulfonat) aus einer 0,1 M Salzlösung adsorbiert. Die Konzentration der Polyelektrolytlösungen beträgt $10^{-2}$ mol/L bezogen auf eine Monomereinheit des Polymers. Für die Beschichtung werden die Objektträger für 2 min in die Polyelektrolytlösung getaucht und anschließend für insgesamt 4 min in Wasser (1 x 2 min, 2 x 1 min). Nach Aufbringen des Polykations (PDADMAC) wird das Polyanion (PSS) auf dem Substrat adsorbiert. Die Adsorption der Polyelektrolyte erfolgt durch Ladungsüberkompensation. Für die Lösungen wird ausschließlich Reinstwasser mit einem Widerstand von 18 MΩ×cm verwendet. Durch elektrostatische Wechselwirkungen adsorbieren die Polymere aus wässriger Lösung auf dem Substrat. Die fertige PEM-Schicht ist ca. 30 nm dick.

Das erhaltene Schichtsystem dient als Treiberschicht, in der das ZnO die Laserenergie absorbiert und dessen Erwärmung zu einem Verdampfen des in der Polyelektrolytschicht enthaltenen Wassers führt.

Als Trägerschicht dient ein Lack in Form eines Komposits aus Acrylaten und Siliziumorganischen Verbindungen. Um die Trägerschicht erfolgreich schneiden zu können, muss sie Licht der Laserwellenlänge absorbieren. Wenn der verwendete Lack dies nicht gewährleistet, kann dies durch Einbau eines geeigneten UV-Absorbers, z.B. Butyl-Methoxydibenzoylmethan (BMDBM), erreicht werden. Die Trägerschicht wird durch Aufschleudern (spincoating) (1000 rpm, 30 s) aufgebracht. Das Aushärten dieses Lacks erfolgt thermisch (85 °C, 20 min post-exposure bake) und durch UV-Belichtung (30 s). Nach der Belichtung erfolgt eine weitere thermische Behandlung bei 85 °C (45 min) zur vollständigen Aushärtung des Lackes. Die gehärtete Lackschicht ist etwa 2 μm dick.

Die Adhäsion der Katapultierschicht auf dem Objektträger kann durch einen Peeltest (in Anlehnung an ASTM D 1876) bestimmt werden. Bei einer Zuggeschwindigkeit von 1000 mm/min ergibt sich ein Wert von 80 N/m. Dabei zeigt sich, dass die Trägerschicht von der Treiberschicht abgezogen wird, was erfindungsgemäß bevorzugt, aber nicht unbedingt notwendig ist.

**Patentansprüche**

1. Transportsystem für die Mikrodissektion und den laserinduzierten Transport biologischen Materials umfassend ein für Laserlicht transparentes Substrat (10) mit einer einseitig darauf angeordneten, ganzflächig anhaftenden Funktionsschicht zur Aufnahme des biologischen Materials,
   **dadurch gekennzeichnet, dass**
   die Funktionsschicht wenigstens eine auf dem Substrat (10) angeordnete Treiberschicht (14, 16) und eine auf der Treiberschicht (14, 16) angeordnete Trägerschicht (18) umfasst, wobei die Treiberschicht (14, 16) zur Absorption von Laserlicht unter Gasfreisetzung für die Umsetzung eines Anteils der eingestrahlten Energie in mechanische Arbeit ausgebildet ist und die Trägerschicht (18) so ausgebildet ist, dass sie sich in der Umgebung einer zum laserinduzierten Transport ausreichenden Gasfreisetzung in der Treiberschicht (14, 16) auch außerhalb des vom Laserlicht beleuchteten Flecks durch die mechanische Arbeit vom Substrat (10) abhebt ohne zu reißen, wobei die Treiberschicht (14, 16) aus einer auf dem Substrat (10) angeordneten Laserlicht-Absorberschicht (16) und einer darauf angeordneten, unter Erwärmung Gas freisetzenden Schicht (14) gebildet ist.

2. Transportsystem nach Anspruch 1, **dadurch gekennzeichnet, dass** die Laserlicht-Absorberschicht (16) UV-Licht absorbiert und aus einem Material aus der Gruppe Zinkoxid, Titanoxid, Zinnoxid, Indium-Zinnoxid oder aus einem Ceroxid oder aus einem Metall aus der Gruppe Silber, Gold, Titan, Chrom gebildet ist.

3. Transportsystem nach einem der Ansprüche 1 oder 2, **dadurch gekennzeichnet, dass** die Gas freisetzende Schicht (14) eine Struktur mit eingelagertem Wasser aufweist.

4. Transportsystem nach Anspruch 3, **dadurch gekennzeichnet, dass** die Gas freisetzende Schicht (14) eine mehrlagige Polyelektrolyt-Schicht mit darin gebundenem Wasser ist.

5. Transportsystem nach einem der Ansprüche 1 bis 4, **dadurch gekennzeichnet, dass** die Treiberschicht (14, 16) höchstens 1 Mikrometer dick ist.

6. Transportsystem nach Anspruch 5, **dadurch gekennzeichnet, dass** die Treiberschicht (14, 16) zwischen 100 und 200 nm dick ist.

7. Transportsystem nach einem der Ansprüche 1 bis 6, **dadurch gekennzeichnet, dass** die Trägerschicht (18) eine Acryllackschicht ist.

8. Transportsystem nach einem der Ansprüche 1 bis 7, **dadurch gekennzeichnet, dass** die Trägerschicht (18) wenigstens 1 Mikrometer dick ist.

9. Transportsystem nach Anspruch 8, **dadurch gekennzeichnet, dass** die Trägerschicht (18) um 2 Mikrometer dick ist.

10. Transportsystem nach einem der Ansprüche 1 bis 9, **dadurch gekennzeichnet, dass** die Trägerschicht (18) zwischen 1 % und 5 % der eingestrahlten Laserenergie absorbiert und mit fokussiertem Laserlicht schneidbar ist.

**Claims**

1. A transport system for the microdisection and the laser-induced transport of biological material comprising a substrate (10) transparent for laser light with a functional layer, arranged thereon on one side and adhering over the whole area, for receiving the biological material,
**characterized in that**
the functional layer has at least one driver layer (14, 16) arranged on the substrate (10) and a carrier layer (18) disposed on the driver layer (14, 16), the driver layer (14, 16) being designed for absorbing laser light while releasing gas for converting part of the irradiated energy into mechanical work and the carrier layer (18) being designed such that it delaminates by mechanical work from the substrate (10) without tearing in the vicinity of a gas release sufficient for laser-induced transport in the driver layer (14, 16) even outside the spot illuminated by the laser light,
the driver layer (14, 16) being formed from a laser-light absorber layer (16) disposed on the substrate (10) and a layer (14) that is disposed thereon and releases gas when being warmed.

2. The transport system according to Claim 1, **characterized in that** the laser-light absorber layer (16) absorbs UV light and is formed from a material from the group zinc oxide, titanium oxide, tin oxide, indium tin oxide or from a cerium oxide or from a metal from the group silver, gold, titanium, chromium.

3. The transport system according to one of Claims 1 or 2, **characterized in that** the gas-releasing layer (14) has a structure with intercalated water.

4. The transport system according to Claim 3, **characterized in that** the gas-releasing layer (14) is a multi-layer polyelectrolyte layer with water bound therein.

5. The transport system according to one of Claims 1 to 4, **characterized in that** the driver layer (14, 16) has a thickness of at most 1 micrometer.

6. The transport system according to Claim 5, **characterized in that** the driver layer (14, 16) has a thickness between 100 and 200 nm.

**7.** The transport system according to one of Claims 1 to 6, **characterized in that** the carrier layer (18) is an acrylic paint film.

**8.** The transport system according to one of Claims 1 to 7, **characterized in that** the carrier layer (18) has a thickness of at least 1 micrometer.

**9.** The transport system according Claim 8, **characterized in that** the carrier layer (18) has a thickness of about 2 micrometers.

**10.** The transport system according to one of Claims 1 to 9, **characterized in that** the carrier layer (18) absorbs between 1 % and 5 % of the irradiated laser energy and can be cut using focussed laser light.


**Revendications**

**1.** Système de transport pour la microdissection et le transport induit par laser de matière biologique, comprenant un substrat (10) transparent pour la lumière laser avec, sur une face, une couche fonctionnelle qui adhère sur toute la surface et accueille la matière biologique,
**caractérisé par le fait que**
la couche fonctionnelle comprend au moins une couche transporteuse (14, 16) disposée sur le substrat (10) et une couche de support (18) disposée sur la couche transporteuse (14, 16), avec la couche transporteuse (14, 16) étant conçue pour absorber la lumière laser et de transformer une partie de l'énergie absorbée en travail mécanique en libérant du gaz et la couche support (18) étant conçue d'une telle manière qu'elle se détache par le travail mécanique du substrat (10) sans se déchirer, ceci à proximité de l'endroit où le gaz est libéré dans la couche transporteuse (14, 16) dans des quantités suffisantes pour le transport induit par laser et aussi en dehors de l'endroit illuminé par la lumière laser,
avec la couche transporteuse (14, 16) étant formée par une couche absorbant la lumière laser (16) disposée sur le substrat (10) et, disposée sur celle-ci, une couche qui libère du gaz (14) sous échauffement.

**2.** Système de transport selon la revendication 1, **caractérisé par le fait que** la couche absorbant la lumière laser (16) absorbe la lumière UV et qu'elle est constituée d'un matériau du groupe oxyde de zingue, oxyde de titane, oxyde d'étain, oxyde d'étain-indium ou d'un oxyde de cérium ou d'un métal du groupe argent, or, titane, chrome.

**3.** Système de transport selon une des revendications 1 ou 2, **caractérisé par le fait que** la couche libérant le gaz (14) comporte une structure incorporant de l'eau.

**4.** Système de transport selon la revendication 3, **caractérisé par le fait que** la couche libérant le gaz (14) est une multicouche de polyélectrolyte contenant de l'eau.

**5.** Système de transport selon une des revendications 1 à 4, **caractérisé par le fait que** l'épaisseur de la couche transporteuse (14, 16) n'excède pas 1 micromètre.

**6.** Système de transport selon la revendication 5, **caractérisé par le fait que** l'épaisseur de la couche transporteuse (14, 16) se situe entre 100 et 200 nm.

**7.** Système de transport selon une des revendications 1 à 6, **caractérisé par le fait que** la couche support est une couche en laque acrylique.

**8.** Système de transport selon une des revendications 1 à 7, **caractérisé par le fait que** l'épaisseur de la couche de support (18) s'élève à au moins 1 micromètre.

**9.** Système de transport selon la revendication 8, **caractérisé par le fait que** l'épaisseur de la couche de support (18) s'élève à environ 2 micromètres.

**10.** Système de transport selon une des revendications 1 à 9, **caractérisé par le fait que** la couche de support (18) absorbe entre 1 % et 5 % de l'énergie laser irradiée et qu'elle peut être coupée avec de la lumière laser focalisée.

a

b

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616216 A1
- DE 19603996 C2
- EP 1309846 B1

- US 20040077073 A1
- EP O926480 A3

**In der Beschreibung aufgeführte Nicht-Patentliteratur**

- **Vogel A et al.** Mechanisms of Laser-Induced Dissection and Transport of Histologic Specimens. *Biophysical Journal,* 2007, vol. 93, 4481-4500
- **I. Zergioti ; A. Karaiskou ; D. G. Papazoglou ; C. Fotakis ; M. Kapsetaki ; D. Kafetzopoulos.** Femtosecond laser microprinting of biomaterials. *Appl. Phys. Lett.,* 2005, vol. 86, 163902

- **N.T. Kattamis ; P. E. Purnick ; R. Weiss ; C. B. Arnold.** Thick film laser induced forward transfer for deposition of thermally and mechanically sensitive materials. *Appl. Phys. Lett.,* 2007, vol. 91, 171120
- **Nagel M et al.** Aryltriazene photopolymer thin films as sacrificial release layers for laser-assisted forward transfer systems: study of photoablative decomposition and transfer behaviour. *Appl. Phys. A,* 22. Mai 2008, vol. 92, 781-789